# FASCICULE DE BREVET EUROPEEN

(11) **EP 0 781 043 B1**
(45) Date de publication et mention de la délivrance du brevet: **12.09.2001**
(21) Numéro de dépôt: 96203524.2
(22) Date de dépôt: 12.12.1996
(51) Int. Cl.: H04N 5/63, H02M 3/338

(54) **Appareil d'affichage d'images sur un tube écran, muni d'une alimentation à découpage auto-oscillante**
Vorrichtung zur Anzeige von Bildern auf einer Bildschirmröhre, mit einem selbstschwingenden Schaltnetzteil
Apparatus for displaying pictures on a cathode ray tube, provided with a self-oscillating switching power supply

(30) Priorité: 20.12.1995 FR 9515179
(43) Date de publication de la demande: 25.06.1997
(73) Titulaire: Koninklijke Philips Electronics N.V., 5621 BA Eindhoven (NL)
(72) Inventeur: Decraemer, Alain, 75008 Paris (FR); Dormet, Jean-Claude, 75008 Paris (FR)
(74) Mandataire: Charpail, François

(56) Documents cités:
- FR-A- 2 607 991
- GB-A- 2 257 859
- US-A- 3 629 686

## Description

La présente invention concerne un appareil d'affichage d'images sur un tube écran à faisceau cathodique, avec un dispositif de veille restant actif dans un état de veille de l'appareil, muni d'une alimentation à découpage auto-oscillante comportant, en cascade entre deux bornes d'une source de tension continue obtenue par redressement du secteur, un interrupteur, une inductance ballast, et le trajet de courant d'alimentation d'un étage de balayage ligne, lequel engendre des tensions d'alimentation pour différents éléments de l'appareil qui doivent être isolés du secteur, l'état de veille étant obtenu par arrêt du balayage ligne alors que l'alimentation à découpage est toujours active et alimente le dispositif de veille, et l'interrupteur de l'alimentation à découpage, qui passe par des périodes successives de conduction et de non-conduction, étant mis en état de non-conduction, à la fin de chaque période de conduction, par un agencement dit agencement de blocage, qui mesure le courant dans l'interrupteur et qui commande la mise en non-conduction de ce dernier lorsque le courant mesuré dépasse une valeur prédéterminée.

L'invention s'applique, entre autres, dans le domaine de la télévision et dans celui des moniteurs.

Une alimentation à découpage est connue du brevet US 4,788,591. Elle comprend un agencement de blocage, qui mesure le courant dans l'interrupteur et qui commande la mise en non-conduction de ce dernier lorsque le courant mesuré dépasse une valeur prédéterminée. L'ensemble qui commande les périodes successives de conduction et de non-conduction est toutefois relativement complexe.

Un objet de l'invention est de simplifier la réalisation de la commande, afin d'obtenir à la fois un prix bas et une grande fiabilité.

A cet effet, l'interrupteur étant un transistor à effet de champ de type MOS, sa mise en conduction est commandée, au début de chaque période de conduction, au moyen d'un enroulement couplé magnétiquement à l'inductance ballast, enroulement dont une extrémité est reliée à un point de liaison entre l'interrupteur et l'inductance ballast, de façon à engendrer à son autre extrémité une tension de commande qui, par rapport au point de liaison, est en opposition de phase par rapport à la tension générée dans l'inductance ballast, et qui est transmise à la grille du transistor à effet de champ via une première capacité, une seconde capacité étant montée en shunt sur l'espace drain-source du transistor à effet de champ.

De préférence, celle des bornes de la source de tension continue qui est reliée au transistor à effet de champ étant appelée première borne, l'agencement de blocage est connecté entre la grille du transistor MOS et la seconde borne de la source de tension continue, et il comporte une résistance de mesure de courant qui est insérée entre l'étage de balayage ligne et la seconde borne, et l'agencement de blocage est avantageusement constitué essentiellement par un transistor de blocage dont le trajet de courant principal est disposé entre la grille du transistor MOS et la seconde borne de la source de tension continue, et dont l'espace base-émetteur est relié en parallèle avec la résistance de mesure de courant.

Ainsi, l'agencement de blocage et les moyens de mise en conduction coopèrent de façon simple.

L'appareil comporte avantageusement un circuit de régulation connecté entre, d'une part, une borne portant la tension d'alimentation de l'étage de balayage ligne, et, d'autre part, la base du transistor de blocage.

Ainsi, l'agencement de blocage et le circuit de régulation coopèrent de façon simple.

Le circuit de veille est avantageusement alimenté à partir d'un montage redresseur connecté à un enroulement additionnel, couplé magnétiquement à l'inductance ballast.

Cela permet d'assurer l'alimentation du circuit de veille pendant les périodes de veille.

Ces aspects de l'invention ainsi que d'autres aspects plus détaillés apparaîtront plus clairement grâce à la description suivante d'un mode de réalisation constituant un exemple non limitatif.

La figure 1 représente schématiquement un appareil d'affichage d'images muni d'un tube écran à faisceau cathodique, d'un étage de balayage ligne, d'un dispositif de veille, et d'une alimentation à découpage auto-oscillante.

La figure 2 représente schématiquement une alimentation à découpage auto-oscillante.

La figure 3 représente des courbes pour illustrer le fonctionnement de l'alimentation à découpage auto-oscillante.

La figure 4 représente schématiquement un module de régulation convenable pour assurer la régulation de l'alimentation à découpage auto-oscillante.

L'invention va être décrite en référence à un téléviseur, mais elle s'applique aussi bien à tout appareil d'affichage d'images, par exemple à un moniteur.

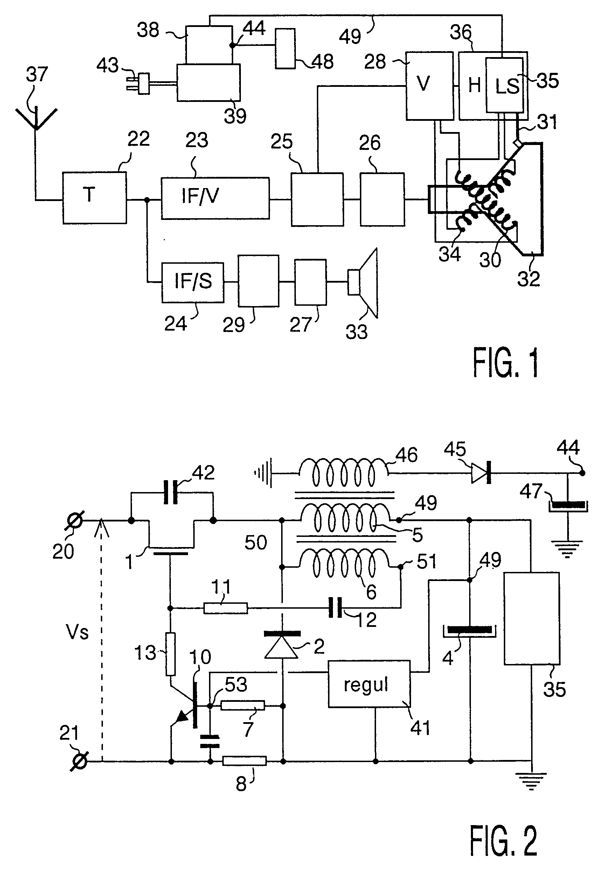

Le téléviseur dont le schéma est représenté sur la figure 1 comprend un syntoniseur 22 recevant un signal par exemple d'une antenne 37 et transposant sa fréquence vers des fréquences intermédiaires destinées à un amplificateur à fréquence intermédiaire vidéo 23 et à un amplificateur à fréquence intermédiaire son 24 qui lui font suite. L'amplificateur à fréquence intermédiaire son 24 est suivi d'un démodulateur 29 qui délivre les signaux audio en bande de base à un amplificateur de puissance audio 27, alimentant un haut-parleur 33. L'amplificateur à fréquence intermédiaire vidéo 23 est suivi d'une unité 25 qui fournit un signal vidéo en bande de base à un amplificateur vidéo 26 délivrant les signaux ad-hoc aux électrodes d'un tube écran 32 à faisceau cathodique. L'unité 25 extrait aussi du signal des signaux de synchronisation qui sont amenés à un circuit de balayage ligne 36 et à un circuit de balayage trame 28. Le circuit de balayage trame 28 délivre un courant dans un bobinage 30 déviateur de trame. Le circuit de balayage ligne 36 comprend un étage de puissance 35 qui délivre un courant dans un bobinage 34 déviateur de ligne, et qui engendre une tension dite "très haute tension", d'environ 25 Kv, pour alimenter l'écran du tube écran, auquel elle est reliée par une connexion 31. Le circuit de puissance ligne 35 est alimenté, via une connexion 49, par un circuit d'alimentation à découpage 38 auto-oscillant, lui même alimenté en courant continu par un module 39, de type connu, pouvant être relié au secteur par une prise de courant 43 et constitué essentiellement par un ensemble redresseur et une capacité-réservoir. Les autres circuits 22-29, qui doivent être isolés du secteur, sont alimentés de façon connue à partir de l'étage de puissance lignes 35, par des connexions non représentées pour simplifier la figure. Le découpage de l'alimentation à découpage n'est pas synchronisé avec la fréquence ligne. Un circuit de veille 48, restant actif dans un état de veille de l'appareil, est alimenté directement par l'alimentation 38. L'état de veille est obtenu par arrêt de l'étage de puissance 35 du balayage ligne, ce qui supprime l'alimentation des circuits 22-29 à partir de l'étage de puissance lignes 35, alors que l'alimentation à découpage 38 est toujours active et alimente le dispositif de veille 48.

L'alimentation auto-oscillante de la figure 2 correspond à l'alimentation à découpage 38 de la figure 1. La source de tension continue 39 de la figure 1 fournit une tension Vs de l'ordre de 300 volts, obtenue par un pont redresseur si le secteur est à 220 volts ou par un doubleur dans le cas de 110 volts. Cette tension est appliquée entre une première borne 20 et une seconde borne 21, avec par exemple son pôle positif sur la borne 20. De cette polarité découlent les types de polarité des semi-conducteurs mentionnés dans la suite.

L'alimentation comprend, en cascade à partir de la borne 20, un interrupteur 1, fait d'un transistor à effet de champ MOS à canal N et à enrichissement, et une inductance ballast 5, reliée à une entrée d'alimentation de l'étage de puissance de balayage ligne 35, dont le trajet de courant d'alimentation se referme par la borne 21. L'étage de balayage ligne 35 est shunté par une capacité réservoir 4, et l'ensemble fait de l'étage de balayage ligne en cascade avec l'enroulement 5 est shunté par une diode de récupération 2. Le fonctionnement des éléments 1, 5, 4, 2, 35 ci-dessus est bien connu. La tension d'alimentation délivrée à l'étage de balayage ligne 35 est par exemple de 100 volts.

L'interrupteur de l'alimentation à découpage, à savoir le transistor 1, passe par des périodes successives de conduction et de non-conduction. Sa mise en non-conduction est commandée par un agencement de blocage qui mesure le courant, et qui commande le blocage du transistor 1 lorsque le courant mesuré dépasse une valeur prédéterminée. Cet agencement est essentiellement constitué par le transistor 10, de type "NPN", appelé transistor de blocage, dont le trajet de courant principal est disposé entre la grille du transistor MOS 1 et la seconde borne 21 de la source de tension continue, avec une résistance 13 en série, et dont l'espace base-émetteur est relié à une résistance 8 de mesure de courant, qui est insérée entre l'étage de balayage ligne 35 et la seconde borne 21. Le courant qui traverse cette résistance est à peu de chose près le même que celui qui traverse le transistor 1. La tension engendrée par le courant dans la résistance 8 est transmise à la base 53 du transistor 10 par une résistance 7.

Au point 50 entre le transistor 1 et l'inductance 5 est connectée une extrémité d'un enroulement 6 couplé magnétiquement à l'inductance ballast. Cet enroulement est bobiné dans un sens tel qu'il engendre, entre son autre extrémité 51 et le point 50, une tension de commande qui est en opposition de phase par rapport à la tension générée dans l'inductance ballast, c'est-à-dire par rapport à la tension entre le point 49 et le point 50. L'extrémité 51 est reliée à la grille du transistor à effet de champ via une première capacité 12 en série avec une résistance 11. Une seconde capacité 42 est montée en shunt sur l'espace drain-source du transistor à effet de champ.

Le circuit de veille 48 de la figure 1 est alimenté par une borne 44 de l'alimentation à découpage, à partir d'un montage redresseur fait d'une diode 45 et d'une capacité réservoir 47, connecté à un enroulement additionnel 46, couplé magnétiquement à l'inductance ballast 5.

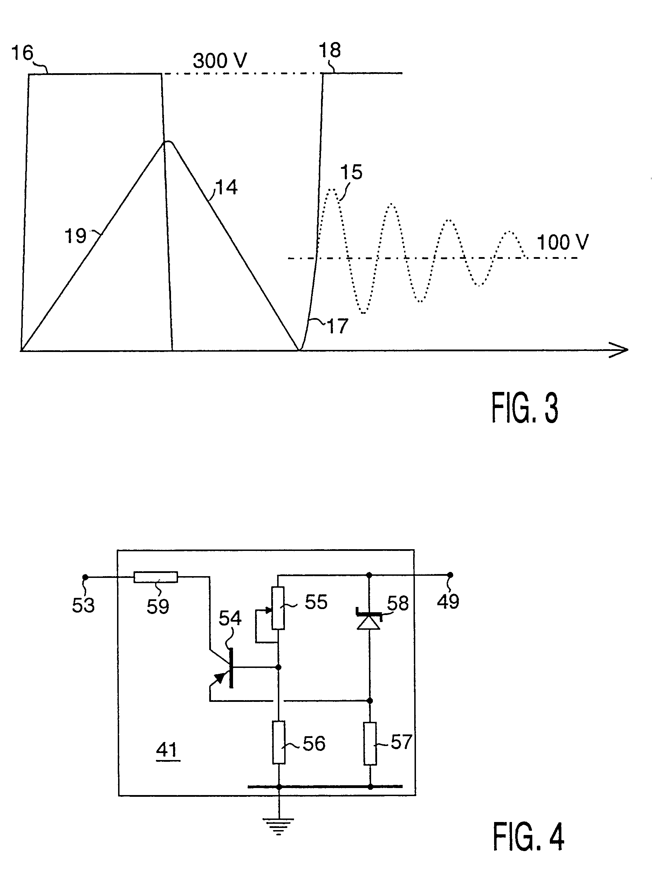

Le fonctionnement de cet ensemble va être expliqué à l'aide des courbes de la figure 3, et du schéma de la figure 2. Supposons d'abord le transistor 1 en conduction. La tension au point 50 de la figure 2, indiquée par la référence 16 sur la figure 3, est de 300 volts : en négligeant la tension aux bornes du transistor 1, il y a 100 - 300= -200 volts sur la borne 49 par rapport à la borne 50. Les enroulements 5 et 6 fonctionnant en transformateur, une tension positive est engendrée au point 51 par rapport au point 50. Cette tension, transmise à la grille du transistor 1 par la capacité 12 et la résistance 11, maintient le transistor en conduction. Avec une tension fixée aux bornes de l'inductance 5, entre le point 50 et le point 49, le courant dans cette inductance 5, indiqué par la référence 19, et qui passe aussi dans le transistor 1 et dans la résistance 8, présente une croissance approximativement linéaire. Supposons par exemple que la résistance 8 vaut 0,56 Ω. Lorsque le courant y atteint environ 1,8 ampère, cela développe une tension de 1 volt qui, par l'intermédiaire de la résistance 7, rend conducteur le transistor 10. L'extrémité inférieure de la résistance 13 descend alors presque à zéro volt. La tension appliquée à la grille du transistor 1 est celle de l'armature gauche de la capacité 12, mais abaissée par l'effet de pont diviseur des résistances 11 et 13. Le transistor 1 devient non conducteur. A ce moment, le courant dans l'inductance 5, qui ne peut s'annuler d'un seul coup, se referme par la diode de récupération 2, qui devient conductrice. De ce fait, la tension au point 50 descend à environ -0,8 volts. Il y a donc à peu près 101 volts entre la borne 49 et la borne 50. Les enroulements 5 et 6 fonctionnant toujours en transformateur, une tension négative est engendrée au point 51 par rapport au point 50. Cette tension, transmise à la grille du transistor 1, confirme et renforce le blocage.

Comme le courant ne passe plus dans la résistance 8, le transistor 10 redevient non-conducteur et la tension remonte sur son collecteur, mais cela ne rend pas le transistor 1 conducteur, par suite de la tension appliquée par l'enroulement 6. A partir de ce moment, le courant, indiqué par la référence 14, décroît de façon approximativement linéaire. Quand il devient nul, la capacité 42 entre en résonance avec l'inductance 5, ce qui provoque le démarrage d'une oscillation libre ; la référence 15 indique ce que serait cette oscillation si elle pouvait durer. Toutefois, lorsque la tension au point 50 dépasse 100 volts, c'est-à-dire devient supérieure à la tension au point 49, cela induit à nouveau une tension positive au point 51, qui est transmise à la grille du transistor 1 et le rend conducteur. Alors l'oscillation 15 est stoppée, et la tension au point 50 remonte à 300 volts, comme indiqué en 17 et 18.

Un circuit de régulation 41 est connecté entre la borne 49, portant la tension d'alimentation de l'étage de balayage ligne, et la connexion de base 53 du transistor 10 de blocage. Ce circuit, d'un type connu en soi, basé sur la comparaison entre une tension de diode zener et une fraction de la tension d'alimentation, est illustré par la figure 4. Il comporte, entre la borne de tension 49 et la masse, deux montages en cascade : celui d'une diode zener 58 et d'une résistance 57, et celui d'une résistance réglable 55 et d'une résistance 56. Le point commun du montage en cascade cité en premier est relié à l'émetteur d'un transistor 54, de type "PNP", et le point commun du montage en cascade cité en deuxième est relié à la base de ce transistor, dont le collecteur est relié par une résistance 59 à la connexion de base 53 du transistor 10 de la figure 2. La diode zener étant par exemple un modèle 5 volts, la tension d'émetteur du transistor 54 est de l'ordre de 95 volts, supérieure à la tension de base du transistor 10 de la figure 2. Le transistor 54 ajoute donc dans la résistance 7 un courant continu qui décale le seuil de basculement du transistor 10.

Dans une forme de réalisation satisfaisante, les composants essentiels de l'alimentation étaient les suivants :
- transistor 1 = BUK444, transistor 10 = BF487, transistor 54 = BF423,
- diode 2 = BYD34, diode zener 58 = BZX79-C5V6
- capacité 42 = 330 pF, capacité 12 = 33 nF,
- résistance 11 = 1,8 kΩ, résistance 13 = 6,8 kΩ,
   résistance 8 = 0,56 Ω, résistance 7 = 330 Ω,
   résistance 57 = 33 kΩ, résistance 55 = 10 kΩ,
   résistance 56 = 100 kΩ, résistance 59 = 10 kΩ.

Le balayage ligne 35 peut être désactivé, par des moyens connus qui ne font pas partie de l'invention, de telle façon que le module 35 ne fournit plus de tensions aux autres éléments 22-29 de la figure 1, ce qui a pour effet que l'appareil est en veille, et que l'étage de balayage ligne ne consomme à peu près plus rien. Les moyens connus en question peuvent consister, par exemple, en une commande de la part d'un utilisateur, qui, au moyen d'un opto-coupleur inséré dans une liaison de signal de l'étage de balayage ligne, interrompt ce signal et arrête le balayage. Alors les courants dans l'alimentation sont très réduits, mais la régulation 41 maintient la tension de 100 volts, et comme celle de 300 volts est toujours présente aussi, la tension aux bornes de l'inductance 5 demeure inchangée, et donc aussi celle aux bornes de l'enroulement 46 ; le circuit de veille 48 est toujours alimenté sous la même tension.

## Revendications

1. Appareil d'affichage d'images sur un tube écran (32) à faisceau cathodique, avec un dispositif de veille (48) restant actif dans un état de veille de l'appareil, muni d'une alimentation à découpage (38) auto-oscillante comportant, en cascade entre deux bornes d'une source de tension continue (Vs) obtenue par redressement du secteur, un interrupteur (1), une inductance ballast (5), et le trajet de courant d'alimentation d'un étage de balayage ligne (35), lequel engendre des tensions d'alimentation pour différents éléments de l'appareil qui doivent être isolés du secteur, l'état de veille étant obtenu par arrêt du balayage ligne alors que l'alimentation à découpage est toujours active et alimente le dispositif de veille, et l'interrupteur (1) de l'alimentation à découpage, qui passe par des périodes successives de conduction et de non-conduction, étant mis en état de non-conduction, à la fin de chaque période de conduction, par un agencement dit de blocage (7,8,10,13), qui mesure le courant dans l'interrupteur (1) et qui commande la mise en non-conduction de ce dernier lorsque le courant mesuré dépasse une valeur prédéterminée, **caractérisé en ce que,** l'interrupteur étant un transistor à effet de champ de type MOS, sa mise en conduction est commandée, au début de chaque période de conduction, au moyen d'un enroulement (6) couplé magnétiquement à l'inductance ballast, enroulement dont une extrémité (50) est reliée à un point de liaison entre l'interrupteur et l'inductance ballast, de façon à engendrer à son autre extrémité (51) une tension de commande qui, par rapport au point de liaison, est en opposition de phase par rapport à la tension générée dans l'inductance ballast, et qui est transmise à la grille du transistor à effet de champ via une première capacité (12), une seconde capacité (42) étant montée en shunt sur l'espace drain-source du transistor à effet de champ.

2. Appareil d'affichage d'images selon la revendication 1, **caractérisé en ce que**, celle des bornes de la source de tension continue qui est reliée au transistor à effet de champ étant appelée première borne (20), l'agencement de blocage est connecté entre la grille du transistor MOS et la seconde borne (21) de la source de tension continue, et il comporte une résistance (8) de mesure de courant qui est insérée entre l'étage de balayage ligne (35) et la seconde borne (21).

3. Appareil d'affichage d'images selon la revendication 2, **caractérisé en ce que** l'agencement de blocage est essentiellement constitué par un transistor (10) de blocage dont le trajet de courant principal est disposé entre la grille du transistor MOS et la seconde borne (21) de la source de tension continue, et dont l'espace base-émetteur est relié en parallèle avec la résistance (8) de mesure de courant.

4. Appareil d'affichage d'images selon la revendication 3, **caractérisé en ce qu'**il comporte un circuit (41) de régulation connecté entre, d'une part, une borne (49) portant la tension d'alimentation de l'étage de balayage ligne, et, d'autre part, la base (53) du transistor de blocage.

5. Appareil d'affichage d'images selon la revendication 1, **caractérisé en ce que** le circuit de veille (48) est alimenté à partir d'un montage redresseur connecté à un enroulement (46) additionnel, couplé magnétiquement à l'inductance ballast.

## Claims

1. An apparatus for displaying pictures on a cathode ray tube (32), comprising a standby device (48) which remains active in a standby state of the apparatus, and a self-oscillating switched-mode power supply (38) comprising, in cascade between two terminals of a source of direct current (Vs) obtained by mains rectification, a switch (1), a ballast inductance (5) and the supply current path of a line output stage (35) which generates power supply voltages for different elements of the device to be insulated from the mains, the standby state being obtained by stopping the line scan while the switched-mode power supply is always active and feeds the standby device, the switched-mode power supply switch (1), which has successive periods of conductance and non-conductance, being rendered non-conducting at the end of each period of conductance by means of a blocking arrangement (7, 8, 10, 13) which measures the current in the switch (1) and controls the operation of rendering said switch non-conducting when the measured current exceeds a predetermined value, **characterized in that** the switch, being a MOS-type field effect transistor, is turned on at the start of each period of conductance by means of a winding (6) which is magnetically coupled to the ballast inductance, which winding has one end (50) connected to a connection point between the switch and the ballast inductance so as to generate, at its other end (51), a control voltage which, with respect to the connection point, is in phase opposition with the voltage generated in the ballast inductance, said control voltage being transmitted to the gate of the field effect transistor via a first capacitor (12), while a second capacitor (42) is arranged as a shunt onto the drain-source path of the field effect transistor.

2. A picture display apparatus as claimed in claim 1, **characterized in that**, with the terminal of the DC source connected to the field effect transistor being referred to as first terminal (20), the blocking arrangement is connected between the gate of the MOS transistor and the second terminal (21) of the DC source and comprises a current measuring resistor (8) which is inserted between the line output stage (35) and the second terminal (21).

3. A picture display apparatus as claimed in claim 2, **characterized in that** the blocking arrangement is constituted essentially by a blocking transistor (10) having its main current path between the gate of the MOS transistor and the second terminal (21) of the DC source, and its base-emitter path in parallel with the current-measuring resistor (8).

4. A picture display apparatus as claimed in claim 3, **characterized in that** it comprises a control circuit (41) connected between a terminal (49) which holds the power supply voltage of the line output stage, and the base (53) of the blocking transistor.

5. A picture display apparatus as claimed in claim 1, **characterized in that** the standby circuit (48) is fed from a rectifier arrangement connected to an additional winding (46) which is magnetically coupled to the ballast inductance.

## Patentansprüche

1. Bildwiedergabeanordnung mit einer Elektronenstrahlröhre (32), die eine Bereitschaftsanordnung (48) aufweist, die in dem Bereitschaftszustand der Anordnung nach wie vor aktiv ist, und einen selbst schwingenden Schaltnetzteil (38) mit, in Kaskade zwischen zwei Klemmen einer Quelle (Vs) mit Gleichstrom, erhalten durch Gleichrichtung der Netzspannung, einem Schalter (4), einer Ballastinduktivität (5), und der Speisestromstrecke einer Zeilenausgangsstufe (35), die Speisespannungen für verschiedene Elemente der Anordnung erzeugt, die gegenüber dem Versorgungsnetz isoliert werden sollen, wobei der Bereitschaftszustand dadurch erhalten wird, dass die Zeilenabtastung angehalten wird, während der Schaltnetzteil immer aktiv ist und die Bereitschaftsanordnung speist, wobei der Schalter (1) des Schaltnetzteils, der aufeinanderfolgende Perioden eines leitenden und eines nicht leitenden Zustandes hat, am Ende jeder leitenden Periode mit Hilfe einer Sperranordnung (7, 8, 10, 13) in dem nicht leitenden Zustand gehalten wird, wobei diese Sperranordnung den Strom in dem Schalter (1) misst und die Wirkung des gesperrten Zustandes des genannten Schalters steuert, wenn der gemessene Strom einen vorbestimmten Wert übersteigt, **dadurch gekennzeichnet, dass** der Schalter, wobei es sich um einen MOS-Feldeffekttransistor handelt, am Anfang jeder leitenden Periode mit Hilfe einer Wicklung (6) eingeschaltet wird, wobei diese Wicklung mit der Ballastinduktivität magnetisch gekoppelt ist, wobei ein Ende (52) dieser Wicklung mit einem Verbindungspunkt zwischen dem Schalter und der Ballastinduktivität verbunden ist, damit an dem anderen Ende (51) eine Steuerspannung erzeugt wird, die gegenüber dem Verbindungspunkt zu derjenigen Spannung in Gegenphase ist, die in der Ballastinduktivität erzeugt wird, wobei die genannte Steuerspannung über einen ersten Kondensator (12) der Gate-Elektrode des Feldeffekttransistors zugeführt wird, während ein zweiter Kondensator (42) als Shunt über die Drain-Source-Strecke des Feldeffekttransistors vorgesehen ist.

2. Bildwiedergabeanordnung nach Anspruch 1, **dadurch gekennzeichnet, dass**, wenn diejenige Klemme der Gleichstromquelle, die mit dem Feldeffekttransistor verbunden ist, als die erste Klemme (20) bezeichnet wird, wird die Sperranordnung zwischen der Gate-Elektrode des MOS-Transistors und der zweiten Klemme (21) des Gleichstromquelle verbunden und umfasst einen Strommesswiderstand (8), der zwischen der Zeilenausgangsstufe (35) und der zweiten Klemme (21) vorgesehen ist.

3. Bildwiedergabeanordnung nach Anspruch 2, **dadurch gekennzeichnet, dass** die Sperranordnung im Wesentlichen durch einen Sperrtransistor (10) gebildet wird, dessen Hauptstromstrecke zwischen der Gate-Elektrode des MOS-Transistors und der zweiten Klemme (21) des Gleichstromquelle liegt, und dessen Basis-Emitter-Strecke parallel zu dem Strommesswiderstand (8) liegt.

4. Bildwiedergabeanordnung nach Anspruch 3, **dadurch gekennzeichnet, dass** sie eine Steuerschaltung (41) aufweist, die zwischen einerseits einer Klemme (49) mit der Speisespannung der Zeilenausgangsstufe und andererseits der Basis (53) des Sperrtransistors liegt.

5. Bildwiedergabeanordnung nach Anspruch 1, **dadurch gekennzeichnet, dass** die Bereitschaftsschaltung (48) aus einer Gleichrichterschaltung gespeist wird, die mit einer zusätzlichen Wicklung (46) verbunden ist, die mit der Ballastinduktivität magnetisch gekoppelt ist.
